# EUROPÄISCHE PATENTSCHRIFT

(11) **EP 0 720 579 B1**
(45) Veröffentlichungstag und Bekanntmachung des Hinweises auf die Patenterteilung: **04.06.1997**
(21) Anmeldenummer: 94928352.7
(22) Anmeldetag: 14.09.1994
(51) Int. Cl.: B65G 45/02, B65G 45/22

(54) **ANLAGE UND VERFAHREN ZUM SCHMIEREN, REINIGEN UND/ODER DESINFIZIEREN VON TRANSPORTBÄNDERN ODER -KETTEN**
INSTALLATION AND PROCESS FOR LUBRICATING, CLEANING AND/OR DISINFECTING CONVEYOR BELTS OR CHAINS
INSTALLATION ET PROCEDE DE LUBRIFICATION, DE NETTOYAGE ET/OU DE DESINFECTION DE BANDES TRANSPORTEUSES OU DE CONVOYEURS A CHAINE

(30) Priorität: 23.09.1993 DE 4332375
(43) Veröffentlichungstag der Anmeldung: 10.07.1996
(73) Patentinhaber: LANG APPARATEBAU GMBH, 83313 Siegsdorf (DE)
(72) Erfinder: SELBERTINGER, Josef, D-83224 Staudach (DE); WEINERT, Harry, D-09130 Chemnitz (DE)
(74) Vertreter: Wilk, Hans-Christof, Dr.
(86) Internationale Anmeldenummer: EP9403076
(87) Internationale Veröffentlichungsnummer: WO9508497

(56) Entgegenhaltungen:
- EP-A- 0 079 152

## Beschreibung

Die Erfindung bezieht sich auf eine Anlage zum Schmieren, gegebenenfalls auch zum Reinigen oder Desinfizieren, von Transporteinrichtungen, insbesondere Transportbändern oder -ketten, für Lebensmittelbehälter wie Flaschen, Dosen, Gläser, Tüten usw. sowie für deren Verpackungen wie Flaschenkästen und dergleichen. Die Anlage hat eine zentrale Dosierstation mit mindestens einer Dosierpumpe zur Entnahme des Schmiermittelkonzentrats aus einem Gebinde und zur dosierten Abgabe in eine zum Transporteursystem führenden Dosierleitung. Außerdem ist mindestens eine über ein Schmierkreisventil an die Dosierleitung angeschlossene Verteilerleitung vorgesehen, die zu den Düsen führt, mit denen das Schmiermittel auf die Transportbänder bzw. -ketten aufgebracht werden kann. Die Anlage hat schließlich mindestens einen Frischwasseranschluß, der ein Druckminderventil zum Ausgleich von Schwankungen des Wasserdruck aufweist sowie eine Zumischeinheit zum Herstellen der Gebrauchslösung aus dem Schmiermittelkonzentrat und dem Frischwasser.

Beim Abfüllen von Getränken und anderen Lebensmitteln in neue oder wiederverwendete Glas- oder Kunststoffflaschen, Dosen, Tüten und dergleichen werden die Gebinde auf Transportbahnen, z. B. Transportbändern oder Transportketten, zu den einzelnen Stationen gefördert. Die Transportbahnen bestehen in der Regel aus ein- oder mehrbändigen Gliederketten aus Metall oder Kunststoff, die mit einer dem Produktionsablauf abgestimmten Geschwindigkeit angetrieben werden. Sie sind entsprechend der räumlichen Verhältnisse und des Produktionsablaufes in einzelne Abschnitte mit jeweils eigenem Antrieb aufgeteilt. Die Transportbänder werden mit speziellen Kettengleitmitteln, den sogenannten Bandschmiermitteln besprüht, um die Reibung an den besonders verschleißgefährdeten Stellen zu reduzieren.

Dabei handelt es sich insbesondere um Reibflächen zwischen der Kette und der Unterlage, z. B. den Gleitschienen, um Reibflächen zwischen Kette und Transportgut, um die Scharniere der Ketten, die Umlenkrollen und Führungsrollen der Ketten sowie die Reibflächen zwischen aneinanderstoßenden Gebinden. Entsprechend dem Produktionsablauf und den Anforderungen an die Schmierung der Gliederketten und ihrer Führungen werden einzelne Transportbandabschnitte zu sogenannten "Schmierkreisen" zusammengefaßt. Die Hauptanforderung an die Schmieranlage besteht darin, eine aus Wasser und einer wasserlöslichen Chemikalie bestehende Schmiermittel lösung mit konstanter Konzentration herzustellen und diese Lösung entsprechend den Anforderungen an die einzelnen Schmierkreise auf die Transportbänder aufzubringen. Bei der Art der Aufbringung kann eine zeitabhängige Schmierung, wobei die Schmierlösung nur bei Betrieb des Transportbandes aufgetragen wird, oder eine mengenabhängige Schmierung vorgenommen werden, bei der eine bestimmte Menge an Schmierlösung je Schmierkreis über Magnetventile mit Impuls-Pause-Taktung oder mit geschwindigkeitsabhängig getakteten Magnetventilen aufgetragen wird. Auch die Konzentration der Schmiermittellösung kann je nach den Anforderungen für jeden Schmierkreis unterschiedlich eingestellt werden. Unterschiedliche Konzentrationen können z. B. bei Transportbändern für Flaschenkästen, für leere, trockene Flaschen, für leere, nasse Flaschen, für volle, nasse Flaschen und für Transportbänder bei Zusammenführungen eingesetzt werden. In diesem Fall arbeitet man z. B. mit fünf oder mehr unterschiedlichen Konzentrationen.

In heutzutage üblichen Bandschmier-Anlagen und -Verfahren wird die Schmiermittellösung zentral in unmittelbarer Nähe des Chemikalienlagers, z. B. in einem Keller oder einem anderen Nebenraum, erstellt. Das Schmiermittelkonzentrat wird über eine Proportionaldosierung zum Frischwasser zudosiert. Eine odere mehrere Dosierpumpen werden über Impulswasserzähler angesteuert, so daß bei festgelegter Wasserdurchflußmenge eine konstante Menge der Chemikalie zudosiert wird. Die zentral hergestellte Schmiermittellösung wird über Stichleitungen an einen zentralen Punkt des Transportbandsystems geführt. Die Leitungen weisen je nach dem Durchfluß Querschnitte bis DN 40 auf und bestehen aus Edelstahl oder Kunststoff.

Im räumlichen Bereich des Transportbandsystems erfolgt die Aufteilung in die einzelnen Schmierkreise mittels Magnetventilen und Druckminderern. Von den Magnetventilen führen Verteilerleitungen entlang der Transporteur-Einrichtungen. Für jeden Transporteur-Abschnitt sind Abgänge vorgesehen, die meistens mit manuellen Absperrungen versehen sind und die zu den Sprühdüsen zum Auftragen der Schmiermittel lösung auf den jeweiligen Transporteur-Abschnitt führen. Die Magnetventile werden über elektromechanische Timer-Steuerungen oder freiprogrammierbare Steuerungen betätigt.

Falls mehrere Schmiermittellösungs-Konzentrationen notwendig sind, werden an der obengenannten, zentralen Stelle mehrere Dosiereinrichtungen installiert, Lösungen (Gebrauchslösungen) mit unterschiedlichen Konzentrationen hergestellt und über mehrere Stichleitungen dem Transportsystem zugeführt. Die Anzahl der Stichleitungen entspricht daher der Anzahl der vorgesehenen unterschiedlichen Konzentrationen.

Der Erfindung liegt die Aufgabe zugrunde, den Aufwand für den Aufbau einer entralen Schmieranlage der eingangs genannten Art zu verringern. Insbesondere soll eine kostengünstige Nachrüstung mit minimalem Aufwand erforderlich sein, wenn eine weitere unterschiedliche Schmiermittel konzentration vorgesehen ist. Ferner soll die Handhabung durch das Bedienungspersonal erheblich vereinfacht und die Betriebssicherheit dadurch erhöht werden.

Diese Aufgabe wird erfindungsgemäß dadurch gelöst, daß der Frischwasseranschluß und die Zumischeinheit räumlich von der zentralen Dosierstation getrennt im Bereich des Transporteur-Systems angeordnet ist, daß der Zumischeinheit ein Durchflußmesser für den Frischwasserzufluß vorgeschaltet ist und daß eine Steuerleitung vom Ausgang des jeweiligen Durchflußmessers zur zugeordneten Dosierpumpe der Dosierstation im Chemikalienraum führt.

Aufgrund der räumlichen Trennung von Dosierpumpen und Zumischeinheiten ist es nicht mehr notwendig, das für die Erstellung der Schmiermittel lösung notwendige Frischwasser in den Chemikalienraum zu führen. Die Investitionskosten für die Anlage werden erheblich verringert. Das Frischwasser wird erst an der zentralen Stelle innerhalb des Transporteursystems zugeführt. Aufgrund der damit wesentlich verkürzten Rohrleitungslänge kommt es nicht mehr zu dem Druckabfall bei den bisherigen Stichleitungssystemen, und das Gesamtverfahren ist durch höhere Systemdruckreserven stärker abgesichert. Das Verteilerleitungssystem kann mit dem vollen zur Verfügung stehenden Wasserdruck beaufschlagt werden. Kleinere Verteilerleitungsnennweiten sind möglich und führen zur Einsparung von Kosten hinsichtlich des Materialeinsatzes und der Montagekapazität.

Bei einer gewünschten Nachrüstung einer weiteren Lösungskonzentrationslinie ist nur noch ein minimaler Aufwand notwendig. Verfahrensoptimierungen an vorhandenen Anlagen können sehr kostengünstig durchgeführt werden. Die räumliche Trennung von Dosierpumpen und Zumischeinheiten erlaubt wesentlich geringere Nennweiten für die Dosierleitungen im Vergleich zu den Stichleitungen bekannter Anlagen, da die Dosierleitungen nur für das Schmiermittelkonzentrat, die Stichleitungen dagegen für die fertige Gebrauchslösung ausgelegt sein müssen.

Schließlich vereinfacht der übersichtlichere und einfachere Aufbau der Dosiereinrichtung und des nachfolgenden Rohrleitungsystems die Handhabung durch das Bedienungspersonal und führt zu mehr Betriebssicherheit.

Wenn mehrere unterschiedliche Konzentrationen der Schmiermittellösung gewünscht werden, wird vorgeschlagen, daß mehrere Dosierpumpen, mit jeweils einer Dosierleitung, einem Frischwasseranschluß und einer Zumischeinheit vorgesehen sind. Für jede gewünschte Konzentration der Schmiermittel lösung wird im Chemikalienlagerraum in unmittelbarer Nähe der Chemikalienvorratsbehälter, z. B. Fässer, Container, Kanister und Tanks, jeweils eine Dosierpumpe mit einer ausreichenden Leistung installiert. Jede Dosierpumpe ist saugseitig mit dem Vorratsgebinde verbunden. Bei Kleingebinden ist eine automatische Umschaltung bei Leermeldung eines Gebindes auf das volle Gebinde vorteilhaft.

Weiterhin wird vorgeschlagen, daß die Zumischeinheit eine Mischkammer für Schmiermittel konzentrat und Frischwasser aufweist. Konzentrationsschwankungen der Schmiermittellösung an der Verteilerleitung werden eliminiert, die durch die technisch bedingten Dosierabstände einer Proportionaldosierung hervorgerufen werden. Mit der Mischkammer wird außerdem eine besonders homogene Schmiermittel lösung bei konstanter Konzentration zur Verfügung gestellt.

Ferner wird vorgeschlagen, daß der Durchflußmesser für Frischwasser ein in die Zumischeinheit integrierter Impulswasserzähler ist.

In bekannten zentralen Schmieranlagen ist für jede Düse ein separates Filter vorgesehen. Um den Investitionsaufwand weiter zu verringern, wird im Gegensatz zu den bekannten üblichen Ausführungen vorgeschlagen, daß jedem Schmierkreisventil ein Filter vorgeschaltet ist. Die den Düsen vorgeschalteten Filter können damit entfallen.

Eine individuelle Mengeneinstellung der aufzusprühenden Schmiermittellösung ist möglich, wenn jeder Düse bzw. jedem Düsenstock, falls mehrere Düsen anstelle einer Einzeldüse vorgesehen sind, ein Durchflußmengen-Regelventil vorgeschaltet ist. Die bisher für jeden Schmierkreis notwendigen Druckminderer können damit entfallen. Neben dem Kostenvorteil werden außerdem Probleme mit der Aerosolbildung verhindert.

Die Integration eines Druckhalteventils in den Durchflußmengen-Regelventilen sichert die Ausbildung eines gewünschten Sprühbildes auch bei unterschiedlichen statischen Höhen der Düsen. Das bisher für jede Düse erforderliche Druckhalteventil kann entfallen und der Material-, Montage-und Service-Aufwand wird reduziert.

Eine ständige Kontrolle der Lösungsmittelkonzentration und eine Dokumentation des Verbrauchs an Schmiermittelkonzentrat und Wasser ist möglich, wenn die Dosierleitung einen Durchflußmesser aufweist und damit die Erfassung des Schmiermittelkonzentratverbrauchs zusammen mit dem Wasserverbrauch erlaubt.

Die Erfindung betrifft nicht nur eine Anlage, sondern auch ein Verfahren zum Schmieren, Reinigen und/oder Desinfizieren von Transporteinrichtungen, insbesondere Transportbändern oder -ketten, für Lebensmittelbehälter wie Flaschen, Dosen, Gläser, Tüten, usw. sowie für deren Verpackungen wie Flaschenkästen und dergleichen, wobei man Schmier-, Reinigungs- bzw. Desinfektionsmittelkonzentrat mit Frischwasser zu einer Gebrauchslösung verdünnt und die Gebrauchslösung über in einem oder mehreren Schmierkreisen angeordnete Düsen auf die Transporteinrichtung aufbringt.

Die bereits oben genannte erfindungsgemäße Aufgabe wird in diesem Verfahren dadurch gelöst, daß man das Konzentrat von einem vom Transporteursystem räumlich getrennt liegenden Ort (üblicherweise dem Chemikalienlagerraum) über eine Rohrleitung (Dosierleitung) zum Transporteursystem pumpt, dort mit Frischwasser verdünnt dessen Zuflußrate mittels Durchflußmessen erfaßt wird, und die Durchflußrate des Konzentrats über die Zuflußrate des zugemischten Frischwassers steuert, indem die von den Durchflußmessern für das Frischwasser erzeugten Signale die Dosierpumpen austeuern.

Weitere Ausgestaltungen des erfindungsgemäßen Verfahrens sind in den Unteransprüchen angegeben. Die Vorteile der Unteransprüche wurden bereits oben ausgeführt.

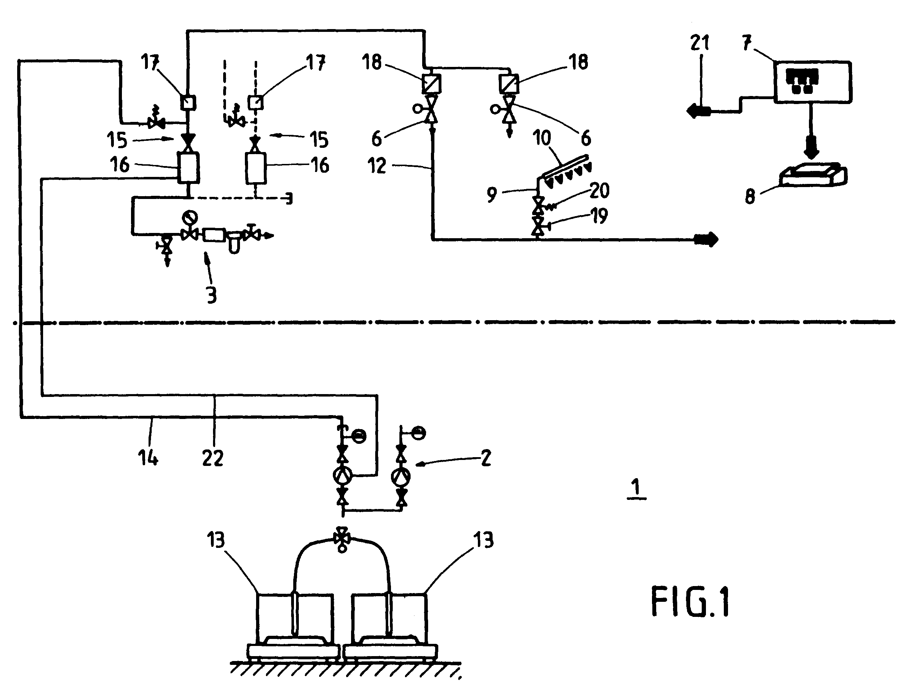

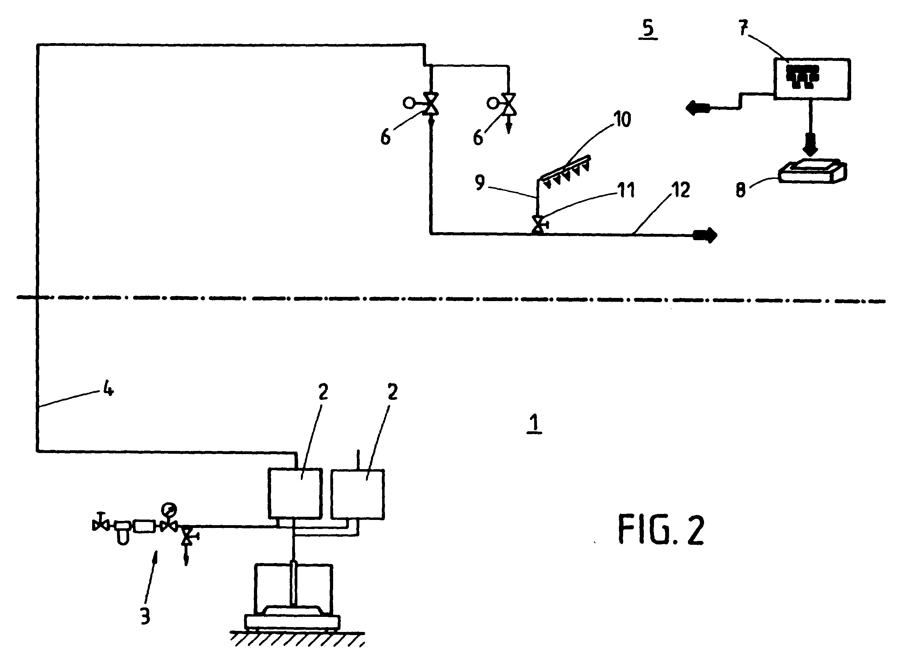

Ein Ausführungsbeispiel der Erfindung wird im folgenden anhand einer Zeichnung (Fig. 1) näher erläutert. Fig. 2 stellt ein Schema bereits bekannter Anlagen und Verfahren zum Schmieren von Transportbändern dar.

In dem in Fig. 2 dargestellten bekannten Verfahren wird die Bandschmierlösung zentral im Chemikalienlagerraum 1 erstellt. Das Schmiermittelkonzentrat wird von einer oder mehreren Dosierzentralen 2 angesaugt und dem vom Frischwasseranschluß 3 zugeführten Wasser zugemischt. Dabei sind soviel Dosierzentralen vorgesehen, wie unterschiedliche Konzentrationen des Schmiermittels benötigt werden. Der Frischwasseranschluß ist mit einer Systemtrennung nach DIN 1983 und DVGW ausgerüstet. Die Dosierpumpen werden über Impulswasserzähler angesteuert, so daß bei einer festen zuströmenden Frischwassermenge eine konstante Menge an Konzentrat eindosiert wird.

Die fertige Gebrauchs lösung wird über eine oder mehrere Stichleitungen 4 den Transporteur-Anlagen 5 zugeführt. Hier findet die Aufteilunr eder Stichleitung in die Schmierkreise statt, die über jeweils ein Schmierkreisventil 6, die einen vorgegebenen, je nach Schmierkreis unterschiedlichen Schmiermitteldurchsatz oder einen je nach den Verfahrensbedingungen der Produktionsanlage unterschiedlichen Durchsatz ermöglichen. Die Schmierkreisventile 6 werden von der Steuereinheit 7 angesteuert, die mit einer Dokumentationseinheit 8 verbunden ist. Von der Verteilerleitung 12 führen Abgänge 9 über Absperrventile 11 zu den einzelnen Düsen bzw. Düsenstöcken 10.

Ein Ausführungsbeispiel der erfindungsgemäßen Anlage ist in Fig. 1 schematisch dargestellt, wobei auch das entsprechende erfindungsgemäße Verfahren deutlich wird. Im Chemikalienlagerraum 1 wird das Schmiermittelkonzentrat aus den Gebinden 13 (Kanister, Fässer, Container, Tanks) mit einer oder mehreren Dosierzentralen 2, die in modularem Aufbau eine oder mehrere Dosierpumpen haben, angesaugt und über die Dosierleitung 14 zu den Transporteuranlagen gepumpt. Für jede Konzentration der Schmiermittellösung ist jeweils eine Dosierpumpe mit ausreichender Leistung installiert. Bei Kleingebinden für das Konzentrat ist eine automatische Umschaltung bei Leermeldung eines Gebindes auf das volle Gebinde möglich.

Die räumliche Trennung von Chemikalienlagerraum und den Transporteur-Anlagen wird durch die strichpunktierte fette Linie in den Fig. 1 und 2 symbolisiert.

Die Dosierleitungen 14 haben einen Querschnitt von DN 6 und bestehen aus Kunststoff oder Edelstahl. Die spezifische Dosierleistung der Dosierpumpen beträgt maximal 15 1/h. Mit einem in der Dosierleitung 14 installierten Durchflußmesser kann die Dosierleistung ermittelt werden.

An der zentralen Stelle innerhalb des Transporteur-Systems wird je nach Anzahl der Dosierpumpen und damit nach Anzahl der gewünschten Konzentrationen der Schmiermittel lösung je eine Zumischeinheit 15 aufgebaut. Die Zumischeinheit hat im wesentlichen ein aus Edelstahl und/oder Kunststoff bestehendes Gehäuse, einen Frischwasseranschluß 3, einen Impulswasserzähler 16, ein Dosierventil, eine Mischkammer 17 und Anschlüsse für Feinfilter 18 sowie Schmierkreisventile 6. Der Frischwasseranschluß 3 ist ebenso wie bei der Anlage nach Fig. 2 nach DIN 1983 und DVGW mit Systemtrennung vom Wasserleitungsnetz ausgeführt. Vom Impulswasserzähler 16 ausgehende Signale laufen über die Steuerleitung 22 in den Chemikalienlagerraum 1 und steuern dort die Dosierpumpen an.

An die Schmierkreisventile 6 sind die Verteilerleitungen 12 entlang den Transporteur-Einrichtungen angeschlossen. Die Abgänge 9 zu den einzelnen Düsen bzw. Düsenstöcken 10 sind über Durchflußmengen-Regelventile 19 mit integrierten Druckhalteventilen 20 an die Verteilerleitung 12 angebunden.

Die Schmierkreisventile 6 werden von einer Steuereinheit 7 mit angeschlossener Dokumentationseinheit 8 auf elektromechanischem Wege oder freiprogrammierbar angesteuert. Die Steuersignale sind mit dem Pfeil 21 symbolisiert.

Wie bereits oben ausgeführt worden ist, liegt das wichtigste Merkmal der Erfindung in der räumlichen Trennung der Dosiereinrichtung in Dosierpumpen und Zumischeinheiten. Wichtig ist auch die für jeden Schmierkreis vorgesehene Filtration der Schmiermittellösung sowie die Durchflußmengenregelung für jede Sprühdüse bzw. jeden Sprühdüsenstock.

## Patentansprüche

1. Vorrichtung zum Schmieren, gegebenenfalls auch zum Reinigen oder Desinfizieren, von Transporteinrichtungen, insbesondere Transportbändern oder -ketten, mit
a) einer zentralen Dosierstation (2) mit mindestens einer Dosierpumpe zur Entnahme des Schmiermittelkonzentrats aus einem Gebinde (13) und zur dosierten Abgabe in eine zum Transporteursystem führenden Dosierleitung (14)
b) mindestens einer über ein Schmierkreisventil (6) an die Dosierleitung (14) angeschlossenen Verteilerleitung (12), die zu den Düsen (10) führt, mit denen das Schmiermittel auf die Transportbänder bzw. -ketten aufgebracht werden kann,
c) mindestens einem Frischwasseranschluß (3), der ein Druckminderventil zum Ausgleich von Schwankungen des Wasserdrucks aufweist,
d) sowie mit einer Zumischeinheit (15) mit Frischwasseranschluß (3) und Dosierventil zum Herstellen der Gebrauchslösung aus dem Schmiermittelkonzentrat und dem Frischwasser,
**dadurch gekennzeichnet,**
daß der Frischwasseranschluß (3) und die Zumischeinheit (15) räumlich von der zentralen Dosierstation (2) getrennt im Bereich des Transporteursystems angeordnet sind, daB der Zumischeinheit (15) ein Durchflußmesser (16) für den Frischwasserzufluß vorgeschaltet ist und daß eine Steuerleitung (22) vom Ausgang des jeweiligen Durchflußmessers (16) zur zugeordneten Dosierpumpe der Dosierstation (2) im Chemikalienraum (1) führt.

2. Vorrichtung nach Anspruch 1,
**dadurch gekennzeichnet,**
daß mehrere Dosierpumpen, mit jeweils einer Dosierleitung (14), einem Frischwasseranschluß (3) und einer Zumischeinheit (15) vorgesehen sind.

3. Vorrichtung nach Anspruch 1 oder 2,
**dadurch gekennzeichnet,**
daß die Zumischeinheit (15) eine Mischkammer (17) für Schmiermittelkonzentrat und Frischwasser aufweist.

4. Vorrichtung nach einem der Ansprüche 1 bis 3,
**dadurch gekennzeichnet,**
daß der Durchflußmesser für Frischwasser ein in die Zumischeinheit (15) integrierter Impulswasserzähler (16) ist.

5. Vorrichtung nach einem der Ansprüche 1 bis 4,
**dadurch gekennzeichnet,**
daß jedem Schmierkreisventil (6) ein Filter (18) vorgeschaltet ist.

6. Vorrichtung nach einem der Ansprüche 1 bis 5,
**dadurch gekennzeichnet,**
daß jeder Düse bzw. jedem Düsenstock (19) ein Durchflußmengen-Regelventil (19) vorgeschaltet ist.

7. Vorrichtung nach Anspruch 6,
**dadurch gekennzeichnet,**
daß ein Druckhalteventil (20) in den Durchflußmengen-Regelventilen (19) integriert ist.

8. Vorrichtung nach einem der Ansprüche 1 bis 7,
**dadurch gekennzeichnet,**
daß die Dosierleitung (14) einen Durchflußmesser aufweist.

9. Verfahren zum Schmieren, Reinigen und/oder Desinfizieren von Transporteinrichtungen, insbesondere von Transportbändern oder -ketten, wobei man
a) Schmier-, Reinigungs- bzw. Desinfektionsmittelkonzentrat mit Frischwasser zu einer Gebrauchslösung verdünnt und
b) die Gebrauchs lösung über in einem oder mehreren Schmierkreisen angeordnete Düsen auf die Transporteinrichtung aufbringt,
**dadurch gekennzeichnet,**
daß man das Konzentrat von einem Transporteursystem räumlich getrennt liegenden Ort (1) mittels Dosierpumpen über eine Rohrleitung (Dosierleitung 14) zum Transporteursystem pumpt, dort mit Frischwasser verdünnt, dessen Zuflußrate mittels Durchflußmessern (16) erfaßt wird, und die Durchflußrate des Konzentrats über die Zuflußrate des zugemischten Frischwassers steuert, indem die von den Durchflußmessern (16) für das Frischwasser erzeugten Signale die Dosierpumpen ansteuern.

10. Verfahren nach Anspruch 9,
**dadurch gekennzeichnet,**
daß man das Konzentrat über mehrere Dosierleitungen (14) mit jeweils unterschiedlicher Durchflußrate zum Transporteursystem pumpt, dort getrennt voneinander mit Frischwasser verdünnt und die Durchflußraten des Konzentrats über die entsprechenden Zuflußraten des zugemischten Frischwassers steuert.

11. Verfahren nach Anspruch 9 oder 10,
**dadurch gekennzeichnet,**
daß man das Konzentrat in einer Mischkammer (17) mit dem Frischwasser verdünnt.

12. Verfahren nach einem der Ansprüche 9 bis 11,
**dadurch gekennzeichnet,**
daß man die Gebrauchslösung vor ihrem Eintritt in den oder die Schmierkreise filtriert.

13. Verfahren nach einem der Ansprüche 9 bis 12,
**dadurch gekennzeichnet,**
daß man die Durchflußmenge der Gebrauchslösung für jede Düse (10) bzw. jeden Düsenstock (10) individuell einstellt.

14. Verfahren nach einem der Ansprüche 9 bis 13,
**dadurch gekennzeichnet,**
daß man die Durchflußrate des Konzentrats in der Dosierleitung (14) laufend mißt.

## Claims

1. An arrangement for lubricating and, optionally, cleaning or disinfecting conveyor installations, more especially belt or chain conveyors, comprising
a) a central metering station (2) comprising at least one metering pump for removing the lubricant concentrate from a drum (13) and introducing it in measured quantities into a metering line (14) leading to the conveyor system,
b) at least one distributor line (12) which is connected to the metering line (14) via a lubricating circuit valve (6) and which leads to the nozzles (10) by which the lubricant can be applied to the conveyor belts or chains,
c) at least one fresh water connection (3) comprising a pressure reducing valve for equalizing variations in water pressure and
d) a mixing unit (15) with a fresh water connection (3) and a metering valve for preparing the in-use solution from the lubricant concentrate and the fresh water,
characterized in that the fresh water connection (3) and the mixing unit (15) are arranged spatially separate from the central metering station (2) in the vicinity of the conveyor system, in that the mixing unit (15) is preceded by a throughflow meter (16) for the supply of fresh water and in that a control line (22) leads from the exit of the particular throughflow meter (16) to the associated metering pump of the metering station (2) in the chemicals room (1).

2. An arrangement as claimed in claim 1, characterized in that several metering pumps each with a metering line (14), a fresh water connection (3) and a mixing unit (15) are provided.

3. An arrangement as claimed in claim 1 or 2, characterized in that the mixing unit (15) comprises a mixing chamber (17) for lubricant concentrate and fresh water.

4. An arrangement as claimed in any of claims 1 to 3, characterized in that the throughflow meter for fresh water is a pulse water meter (16) integrated into the mixing unit (15).

5. An arrangement as claimed in any of claims 1 to 4, characterized in that each lubricating circuit valve (6) is preceded by a filter (18).

6. An arrangement as claimed in any of claims 1 to 5, characterized in that each nozzle or nozzle block (19) is preceded by a flow control valve (19).

7. An arrangement as claimed in claim 6, characterized in that a pressure retaining valve (20) is integrated into the flow control valves (19).

8. An arrangement as claimed in any of claims 1 to 7, characterized in that the metering line (14) comprises a flow meter.

9. A method for lubricating, cleaning and/or disinfecting conveyor installations, more especially belt or chain conveyors, in which
a) lubricant, cleaner or disinfectant concentrate is diluted with fresh water to form an in-use solution and
b) the in-use solution is applied to the conveyor installation through nozzles arranged in one or more lubricating circuits,
characterized in that the concentrate is pumped by metering pumps to the conveyor system through a pipe (metering line 14) from a point (1) spatially separate from the conveyor system and is diluted with fresh water of which the flow rate is measured by throughflow meters (16) and in that the throughflow rate of the concentrate is controlled through the flow rate of the fresh water added by the signals generated by the throughflow meters (16) for the fresh water actuating the metering pumps.

10. A method as claimed in claim 9, characterized in that the concentrate is pumped to the conveyor system at different flow rates through several metering lines (14) and separately diluted with fresh water and the throughflow rates of the concentrate are controlled through the corresponding flow rates of the fresh water added.

11. A method as claimed in claim 9 or 10, characterized in that the concentrate is diluted with the fresh water in a mixing chamber (17).

12. A method as claimed in any of claims 9 to 11, characterized in that the in-use solution is filtered before entering the lubricating circuit(s).

13. A method as claimed in any of claims 9 to 12, characterized in that the throughflow rate of the in-use solution is individually adjusted for each nozzle (10) or each nozzle block (10).

14. A method as claimed in any of claims 9 to 13, characterized in that the throughflow rate of the concentrate through the metering line (14) is continuously measured.

## Revendications

1. Dispositif pour lubrifier, éventuellement aussi nettoyer ou désinfecter des dispositifs de transport, en particulier des convoyeurs à bande ou à chaîne, comprenant :
a) un poste de dosage central (2) comportant au moins une pompe de dosage pour prélever le concentré de lubrifiant d'un récipient (13) et le délivrer en le dosant dans une conduite de dosage (14) desservant le système de transporteur,
b) au moins une conduite de distribution (12) qui est raccordée à la conduite de dosage (14) par l'intermédiaire d'une vanne de circuit de lubrification (6) et qui conduit aux buses (10) permettant l'application du lubrifiant sur les convoyeurs à bande ou à chaîne,
c) au moins un raccord d'eau fraîche (3) qui présente une soupape de réduction de la pression pour compenser les fluctuations de la pression d'eau,
d) ainsi qu'une unité de mélange (15) avec raccord d'eau fraîche (3) et vanne de dosage pour préparer la solution de travail à partir du concentré de lubrifiant et de l'eau fraîche,
caractérisé en ce que le raccord d'eau fraîche (3) et l'unité de mélange (15) sont disposés dans la zone du système du transporteur, en étant séparés, dans l'espace, du poste de dosage central (2), en ce qu'un débitmètre (16) pour l'arrivée d'eau fraîche est intégré dans le circuit en amont de l'unité de mélange (15), et en ce qu'une ligne pilote (22) conduit de la sortie du débitmètre concerné (16) à la pompe de dosage associée du poste de dosage (2) se trouvant dans le dépôt de produits chimiques (1).

2. Dispositif selon la revendication 1, caractérisé en ce qu'il est prévu plusieurs pompes de dosage comprenant, chacune, une conduite de dosage (14), un raccord d'eau fraîche (3) et une unité de mélange (15).

3. Dispositif selon la revendication 1 ou 2, caractérisé en ce que l'unité de mélange (15) présente une chambre de mélange (17) pour du concentré de lubrifiant et de l'eau fraîche.

4. Dispositif selon l'une des revendications 1 à 3, caractérisé en ce que le débitmètre pour l'eau fraîche est un compteur d'eau à impulsions (16) intégré dans l'unité de mélange (15).

5. Dispositif selon l'une des revendications 1 à 4, caractérisé en ce qu'un filtre (18) est intégré dans le circuit en amont de chaque vanne de circuit de lubrification (6).

6. Dispositif selon l'une des revendications 1 à 5, caractérisé en ce qu'une vanne de réglage du débit (19) est intégrée dans le circuit en amont de chaque buse ou de chaque batterie de buses (10).

7. Dispositif selon la revendication 6, caractérisé en ce qu'une soupape de maintien de pression (20) est intégrée dans les vannes de réglage du débit (19).

8. Dispositif selon l'une des revendications 1 à 7, caractérisé en ce que la conduite de dosage (14) comporte un débitmètre.

9. Procédé pour lubrifier, nettoyer et/ou désinfecter des dispositifs de transport, en particulier des convoyeurs à bande ou à chaîne, selon lequel :
a) on dilue un concentré d'agent lubrifiant, nettoyant ou désinfectant avec de l'eau fraîche, pour préparer une solution de travail, et
b) on applique la solution de travail sur le dispositif de transport par l'intermédiaire de buses agencées dans un ou plusieurs circuits de lubrification,
caractérisé en ce qu'on pompe le concentré depuis un endroit (1) séparé, dans l'espace, du système de transporteur, et on le refoule vers le système de transporteur au moyen de pompes de dosage, par l'intermédiaire d'une canalisation (conduite de dosage 14), en ce qu'on l'y dilue avec de l'eau fraîche, dont la vitesse d'arrivée est mesurée grâce à des débitmètres (16), et en ce que la régulation du débit du concentré en fonction de la vitesse d'arrivée de l'eau fraîche apportée dans le mélange est obtenue par le fait que les signaux générés par les débitmètres (16) pour l'eau fraîche actionnent les pompes de dosage.

10. Procédé selon la revendication 9, caractérisé en ce qu'on refoule le concentré en direction du système de transporteur, par l'intermédiaire de plusieurs conduites de dosage (14) de débit différent, on ce qu'on l'y dilue séparément avec de l'eau fraîche, et en ce qu'on règle le débit du concentré en fonction des vitesses d'écoulement correspondantes de l'eau fraîche apportée dans le mélange.

11. Procédé selon la revendication 9 ou 10, caractérisé en ce qu'on dilue le concentré avec de l'eau fraîche dans une chambre de mélange (17).

12. Procédé selon l'une des revendications 9 à 11, caractérisé en ce qu'on filtre la solution de travail avant son entrée dans le ou les circuits de lubrification.

13. Procédé selon l'une des revendications 9 à 12, caractérisé en ce qu'on ajuste individuellement le débit de la solution de travail pour chaque buse (10) ou chaque batterie de buses (10).

14. Procédé selon l'une des revendications 9 à 13, caractérisé en ce qu'on mesure en continu le débit du concentré dans la conduite de dosage (14).
